Europäisches Patentamt

European Patent Office

Office européen des brevets

(19)

(11) Veröffentlichungsnummer: **0 167 106**
**B1**

(12) **EUROPÄISCHE PATENTSCHRIFT**

(45) Veröffentlichungstag der Patentschrift:
30.08.89

(21) Anmeldenummer: 85107936.8

(22) Anmeldetag: 26.06.85

(51) Int. Cl.⁴: **E 01 B 9/14**

(54) Hohldübel für den Eisenbahnbau.

(30) Priorität: 30.06.84 DE 8419672 U

(43) Veröffentlichungstag der Anmeldung:
08.01.86 Patentblatt 86/02

(45) Bekanntmachung des Hinweises auf die Patenterteilung: 30.08.89 Patentblatt 89/35

(84) Benannte Vertragsstaaten:
AT CH DE FR GB IT LI NL SE

(56) Entgegenhaltungen:
AT–B–   254 928
DE–A– 2 627 746
DE–B– 1 180 386
DE–B– 2 424 534
DE–C–   222 708
DE–U– 8 236 410
DE–U– 8 419 672
FR–A–   844 835

(73) Patentinhaber: Wirthwein, Udo
Industriestrasse 27
D-6993 Creglingen (DE)

(72) Erfinder: Wirthwein, Udo
Industriestrasse 27
D-6993 Creglingen (DE)

(74) Vertreter: Klose, Hans, Dipl.-Phys. et al
Kurfürstenstrasse 32
D-6700 Ludwigshafen (DE)

## Beschreibung

Die Erfindung bezieht sich auf einen Hohldübel für den Eisenbahnbau gemäß den im Oberbegriff des Patentanspruchs 1 angegebenen Merkmalen.

Aus der DE-B 1 180 386 ist ein derartiger Hohldübel bekannt, der aus zwei Halbschalen besteht. Diese Halbschalen sind aus Kunststoff gefertigt und weisen an der Außenfläche sägezahnartige Querrippen zur Verankerung in der Schwelle und zum Schutz gegen Ausziehkräfte auf. Jede der Halbschalen weist ferner zwei praktisch über die gesamte Länge sich erstreckende Längsrippen auf, die als Verdrehschutz dienen. Diese Längsrippen erstrecken sich in radialer Richtung weiter nach außen als die genannten Querrippen und es besteht die Gefahr, daß die Querrippen beim Einschrauben der Schwellenschraube nur unvollständig in die Schwelle eingepreßt werden. Der Hohldübel ist im Prinzip rotationssymetrisch bezüglich einer gemeinsamen Mittenachse der beiden Halbschalen ausgebildet. Das in die Schwelle einzubringende Bohrloch muß einen Durchmesser aufweisen, der zumindest gleich groß ist wie der Außendurchmesser im Bereich der breitesten Stelle der Längsrippen, wobei zusätzlich auch die Stärke der Längsrippen noch berücksichtigt werden muß, um das Einschlagen des Hohldübels ohne zu großen Aufwand durchführen zu können.

Ferner ist aus der FR-A 844 835 ein Hohldübel bekannt, der aus gewickeltem Bandmaterial besteht. Durch teilweises Ausstanzen und Umbiegen von Teilbereichen werden rippenartige Vorsprünge erzeugt, die über die Außenfläche vorstehen. Die einzelnen Rippen sind versetzt zueinander angeordnet und nach dem Wickeln bzw. Rollen des zunächst planen Grundkörpers zum hülsenförmigen Dübel liegen die Rippen auf Schraubenlinien. Der Herstellungsaufwand ist nicht unerheblich und es besteht die Gefahr, daß sowohl beim Einschlagen als auch beim Einwirken von Ausziehkräften die durch Biegen hergestellten Rippen unzulässig deformiert werden, wodurch die zulässige Auszugskraft reduziert und auch die Drehsicherheit in Frage gestellt wird.

Ferner ist aus der DE-A 24 24 534 ein aus zwei Halbschalen bestehender und aus Kunststoff gefertigter Hohldübel bekannt. Die Verbindungsebene bei den Halbschalen ist bezüglich der Längsachse geneigt, wobei die Halbschalen ähnlich inversen Keilen ineinander greifen. Beide Halbschalen sind unterschiedlich ausgebildet und müssen auf verschiedenen Werkzeugen hergestellt werden. Der Hohldübel ist für ein zum Boden der Schwelle hin sich erweiterndes Schwellenloch vorgesehen und es sind insoweit zusätzliche Maßnahmen bei der Herstellung der Schwelle bzw. der Bohrung für den Hohldübel erforderlich.

Der Erfindung liegt die Aufgabe zugrunde, den Hohldübel der eingangs genannten Art mit geringem konstruktivem Aufwand dahingehend weiterzubilden, daß er in einfacher Weise in eine zylindrische Bohrung der Schwelle eingesetzt werden kann und eine hohe Sicherheit gegen Verdrehen und gegen Ausziehkräfte gewährleistet.

Die Lösung dieser Aufgabe erfolgt gemäß den im Kennzeichen des Patentanspruchs 1 angegebenen Merkmalen.

Der vorgeschlagene Hohldübel weist einen einfachen Aufbau auf und kann problemlos in eine zylindrische Bohrung der Schwelle eingesetzt werden. Aufgrund der angegebenen Anordnung der Mittelachsen wird das Einschlagen des Hohldübels erleichtert, da der Außendurchmesser des Hohldübels senkrecht zur Teilungsebene der aneinanderliegenden Halbschalen entsprechend reduziert ist. Beim Aufbohren der Schwelle kann die Rippenplatte auf der Schwelle liegenbleiben und nachfolgend kann der Hohldübel problemlos durch eine Öffnung der Rippenplatte hindurch in die Bohrung der Schwelle eingesetzt und eingeschlagen werden. Aufgrund der an der Außenfläche versetzt angeordneten Noppen ist ein guter Verdrehschutz gewährleistet und es wird eine zuverlässige Befestigung bei hohen Ausziehkräften erreicht. Grundsätzlich besteht der Hohldübel aus zwei Halbschalen, doch können beispielsweise auch drei Halbschalen in das Bohrloch zwecks Spurregulierung bei ausgeschlagenen Bohrungen eingesetzt werden. Die Spurregulierung kann ferner durch unterschiedliche Ausgestaltung der Wandstärke der beiden Halbschalen erfolgen. Es ist ferner zweckmäßig, daß die Halbschalen im Bereich der Teilungsebenen an den dortigen Endseiten, an welche die größte Breite gegeben ist, keine Noppen aufweisen, wodurch das Einschlagen erleichtert wird. Da die versetzt angeordneten Noppen nur maximal so weit vorstehen wie der am obenen Ende des Hohldübels vorhandene Ansatz ist ein problemloses Einführen in ein zylindrisches Bohrloch und die dortige zuverlässige Verankerung gewährleistet.

Eine besondere Ausgestaltung ist im Patentanspruch 2 angegeben. In axialer Richtung betrachtet können also die Noppen der einen Ebene praktisch im Bereich der Lücken zwischen den Noppen der anderen Radialebene angeordnet sein, wodurch erhöhte Ausziehkräfte gegeben sind. Als zweckmäßig hat sich erwiesen, proalbschale in der einen Radialebene drei und in der nächsten Radialebene zwei Noppen in der angegebenen Weise versetzt zueinander anzuordnen.

Durch die im Patentanspruch 4 angegebene Ausgestaltung wird das Einschlagen des Hohldübels erleichtert. Die Noppen sind keilförmig ausgebildet und stehen entsprechend über die Aussenfläche vor. Mit den bevorzugt parallel zu Längsebene verlaufenden Seitenflächen der Noppen wird ein guter Verdrehschutz erreicht.

Eine besondere Ausgestaltung ist im Patentanspruch 5 angegeben. Aufgrund der konischen Ausbildung des inneren Hohlraumes erfolgt beim Einschrauben der Schwellenschraube ein Austreiben der Halbschalen und eine gute Verkeilung im Bohrloch wird erreicht. Der Hohlraum weist eine ovale Innenkontur auf, wobei der größte Durchmesser in der Teilungsebene vorhanden ist.

Sind gemäß dem Patentanspruch 8 die Seitenflächen der Noppen oder die Endflächen des oberen Ansatzes im wesentlichen senkrecht zur Teilungsebene angeordnet, so kann die Fertigung mit vergleichsweise einfachen Werkzeugen erfolgen. Nach dem Spritzen oder Pressen der Halbschalen können die Werkzeuge senkrecht zur Teilungsebene bewegt und geöffnet werden, da keine Hinterschneidungen oder dergleichen vorhanden sind.

Eine weitere Ausgestaltung ist im Patentanspruch 9 angegeben. Entsprechend der unterschiedlichen Ausbildung der Wandstärken der Halbschalen liegt die Achse der Schwellenschraube exzentrisch zur Bohrungsachse und durch entsprechendes Einsetzen des Hohldübels kann eine Spurregulierung erfolgen. Eine alte oder ausgeschlagene Bohrung muß lediglich aufgebohrt werden, wobei auch eine Rippenplatte nicht von der Schwelle entfernt werden muß. Nachfolgend wird der Hohldübel mit den beiden Halbschalen unterschiedlicher Wandstärke in der geforderten Weise in das Bohrloch derart eingesetzt, daß die Schraubenachse exzentrisch zur Bohrungsachse angeordnet wird.

Die Erfindung wird nachfolgend anhand der in der Zeichnung dargestellten Ausführungsbeispiele näher erläutert. Es zeigen :

Fig. 1 eine seitliche Ansicht auf eine Halbschale des Hohldübels,

Fig. 2 eine seitliche Ansicht des Hohldübels und zwar in einer bezüglich Fig. 1 um 90° um die Längsachse verdrehten Position,

Fig. 3 eine Ansicht der Halbschale in der durch die Linie III von Fig. 2 angedeuteten Teilungsebene,

Fig. 4 eine Ansicht in Blickrichtung IV gem. Fig. 1,

Fig. 5 eine Ansicht in Blickrichtung V gem. Fig. 2,

Fig. 6 eine Ansicht eines in einem Bohrloch eingesetzten Hohldübels,

Fig. 7 eine Aufsicht in Blickrichtung VII gemäß Fig. 6,

Fig. 8 einen Schnitt durch den Hohldübel gemäß Fig. 6, dessen Halbschalen unterschiedliche Wandstärken aufweisen,

Fig. 9 den Hohldübel gemäß Fig. 8 mit eingeschraubter Schwellenschraube,

Fig. 10 einen Schnitt und teilweise Aufsicht auf die Schwellenschraube mit dem Hohldübel gemäß Fig. 9.

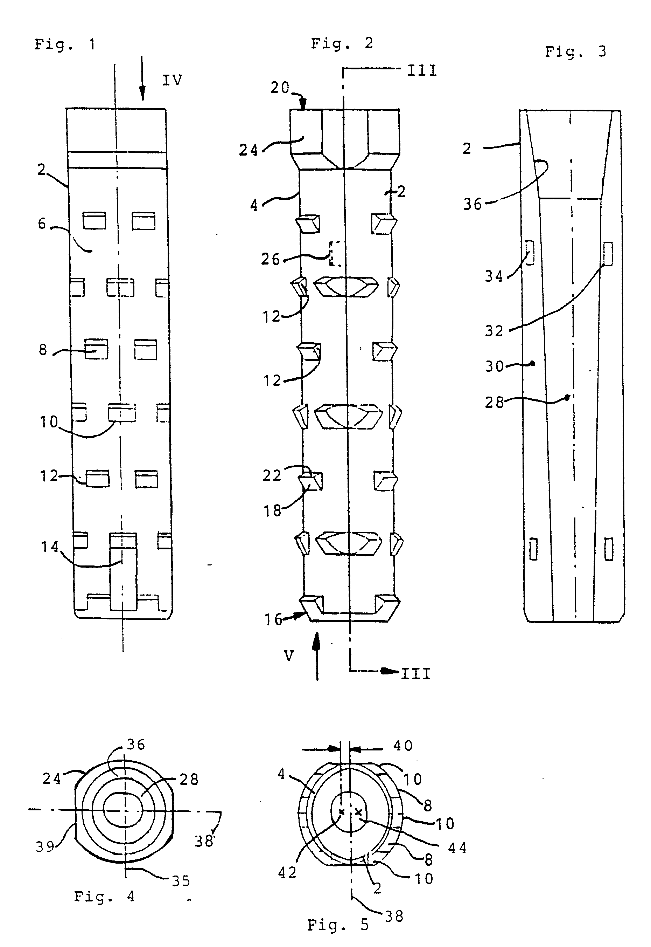

In Fig. 1 ist der Hohldübel in einer seitlichen Ansicht dargestellt, wobei hier nur die eine Halbschale 2 zu sehen ist. Die Halbschale 2 weist auf ihrer Außenfläche 6 in Radialebenen beabstandete Noppen 8 und 10 auf, wobei die Noppen benachbarter Radialebenen versetzt, sozusagen auf Lücke, angeordnet sind. Die Noppen 8, 10 sind etwa dreieckförmig ausgebildet, wobei ihre Seitenflächen 12 im wesentlichen senkrecht zur Zeichenebene stehen, in welcher die Längsachse 14 liegt. Dies ist im Hinblick auf ein einfaches Spritzwerkzeug des aus Kunststoff gefertigten Hohldübels von Bedeutung, da die Werkzeughälften entsprechend auch nur in der zur Zeichenebene senkrechten Richtung zu bewegen sind.

Fig. 2 zeigt den Dübel in einer um 90° bezüglich der Längsachse 14 verdrehten Stellung, so daß nunmehr auch die andere Halbschale 4 zu erkennen ist. Die dem unteren Ende 16 zugeordnete Noppenfläche 18 weist bezüglich der Außenfläche 6 einen kleineren Winkel auf, als die dem oberen Ende 20 zugeordnete Noppenfläche 22. Am oberen Ende weisen die Halbschalen 2, 4 in radialer Richtung nach außen erweiterte Ansätze 24 auf. Durch gestrichelte Linien 26 ist in der Halbschale 4 eine nachfolgend noch zu erläuternde Nut angedeutet, in die ein Vorsprung der Halbschale 2 eingreift.

Fig. 3 zeigt eine Ansicht der einen Halbschale, und zwar in der Teilungsebene des Hohldübels. Der innere Hohlraum 28 ist zum unteren Ende konisch verjüngt ausgebildet, während am oberen Ende eine Erweiterung zwecks leichten Einführens einer Schwellenschraube vorhanden ist. Nunmehr sind auch auf der einen Seite der Halbschale die über die Trennungsfläche 30 vorstehenden Vorsprünge 32 und auf der anderen Seite entsprechende Nuten 34 zu erkennen.

Fig. 4 zeigt eine Aufsicht auf den Hohldübel in Blickrichtung IV gem. Fig. 1, wobei nunmehr auch die Form des Ansatzes 24 zu erkennen ist. Im Bereich des Ansatzes befindet sich die Erweiterung 36 des Hohlraumes 28, der sich nach unten konisch verjüngt anschließt. Der Hohlraum weist einen ovalförmigen Querschnitt auf, wobei die längste Querachse in der Teilungsebene 38 liegt. Senkrecht zur Teilungsebene 38 liegt die Längsebene 35 der beiden Halbschalen, wobei, wie nachfolgend noch zu erläutern ist, die Noppen und insbesondere deren Seitenflächen im wesentlichen parallel zur Längsebene 35 liegen. Der Ansatz 24 weist eine im wesentlichen zylindrische Oberfläche auf, an welcher im Bereich der Enden bevorzugt ebene Endflächen 39 sich anschließen. Die erfindungsgemäß vorgesehenen Endflächen 39 liegen im wesentlichen parallel zur Längsebene 35. Wie in Verbindung mit Fig. 2 ersichtlich, stehen die Noppen 8 über die Außenfläche 6 im wesentlichen gleich weit vor wie der Ansatz 24.

Schließlich zeigt Fig. 5 eine Ansicht von unten auf den Hohldübel, und zwar in Blickrichtung V gem. Fig. 2. Die dem unteren Ende nächst liegenden Noppen 8 bzw. 10 sind zu erkennen. Die Mittelachsen 42, 44 der Halbschalen 2, 4 sind zur Teilungsebene 38 in einem Abstand 40 angeordnet. Dies gilt in zusammengesetztem Zustand des Hohldübels vor bzw. beim Einschlagen in ein Bohrloch. Die Mittelachsen 42, 44 befinden sich bezüglich der Teilungsebene 38 auf der anderen Seite wie die zugehörige Halbschale 2,4. Im Rahmen der Erfindung werden die Halbschalen 2, 4 beim Einschrauben einer Schwellenschraube quer zur Teilungsebene 38 auseinandergepreßt, wodurch der Abstand 40 verringert wird und die Mittelachsen 42, 44 im eingebauten Zustand im wesentlichen in der Teilungsebene 38 liegen. Dies gilt für symmetrische Ausgestaltung der Halbschalen.

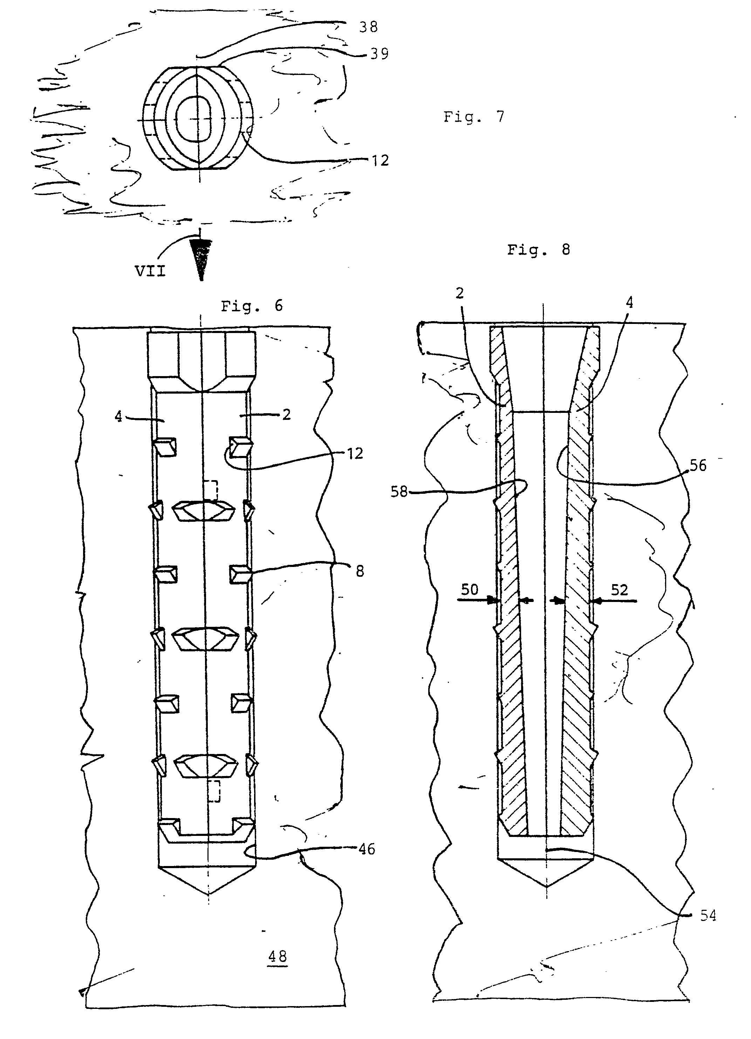

Fig. 6 sowie die Aufsicht gemäß Fig. 7 zeigt eine Ausführungsform mit zwei Halbschalen 2, 4, welche unterschiedliche Wandstärken aufweisen. Der Hohldübel ist in einer Bohrung 46 einer Schwelle 48 aus Holz eingesetzt. Die Seitenflächen 12 der Noppen 8 und ebenso die Endflächen 39 verlaufen im wesentlichen senkrecht zur Teilungsebene 38.

Aus dem Längsschnitt gemäß Fig. 8 ist unmittelbar zu erkennen, daß die Wandstärke 50 der Halbschale 2 kleiner ist als die Wandstärke 52 der Halbschale 4. Die konische Innenfläche 56 der Halbschale 4 liegt näher an der Bohrungsachse 54 als die ebenfalls konisch nach unten zulaufende Innenfläche 58 der Halbschale 2. Dies hat zur Folge, daß die Achse einer eingeschraubten Schwellenschraube exzentrisch zur Bohrungsachse 54 liegt.

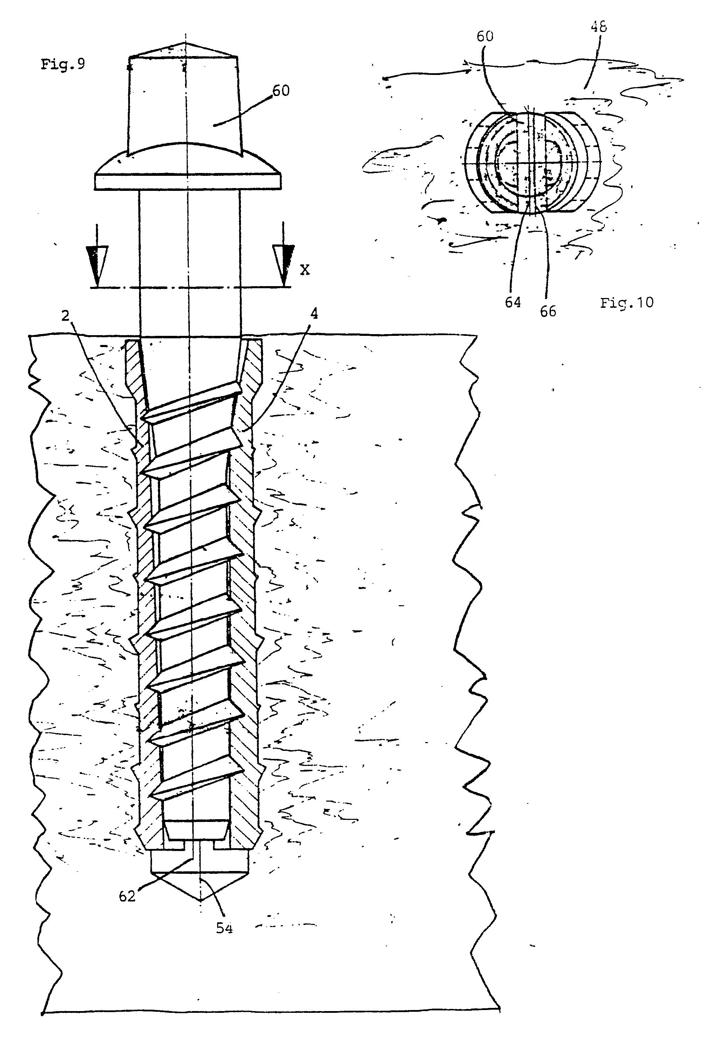

Fig. 9 zeigt einen Schnitt durch den Hohldübel gemäß Fig. 8 mit eingeschraubter Schwellenschraube 60. Aufgrund der unterschiedlichen Wandstärken der beiden Halbschalen 2, 4 liegt die Schraubenachse 62 der Borhrungsachse 54 beabstandet. Eine Spurregulierung kann insbesondere bei Reparaturmaßnahmen an ausgeschlagenen Schwellen in überraschend einfacher Weise durchgeführt werden. Die zwischen Schiene und Schwelle vorhandene Rippenplatte kann beim Aufbohren der Holzschwelle oder des bevorzugt aus Holz bestehenden Dübels einer Betonschwelle und ferner beim Einschlagen des Holzdübels, sei es mit symmetrischen oder auch mit Halbschalen unterschiedlicher Wandstärken, auf der Schwelle liegen bleiben.

Fig. 10 zeigt einen Schnitt bzw. Aufsicht durch die Schwellenschraube 60 bzw. auf die Schwelle 48 in Blickrichtung X gemäß Fig. 9. Die Schraubenmitte 64 der Schwellenschraube 60 befindet sich aufgrund der unterschiedlichen Wandstärken der beiden Halbschalen 2, 4 in einem Abstand zur Bohrungsmitte 66.

**Patentansprüche**

1. Hohldübel für den Eisenbahnbau, und zwar für Holzschwellen oder Betonschwellen, enthaltend zwei im wesentlichen gleich ausgebildete Halbschalen (2, 4), welche an ihrer Außenfläche (6) vorstehende Teile aufweisen, wobei im Inneren des Hohldübels ein Hohlraum (28) für eine Schwellenschraube (60) vorgesehen ist, dadurch gekennzeichnet, daß die an der Außenfläche (6) angeordneten Teile als gegeneinander versetzt angeodnete Noppen (8, 10) ausgebildet sind, daß die Mittelachse (42, 44) der jeweiligen Halbschale (2, 4) einen Abstand (40) zur Teilungsebene (38) aufweist und auf der von der Halbschale (2, 4) abgewandten Seite der Teilungsebene (38) liegt und daß die Noppen (8, 10) über die Außenfläche (6) maximal so weit vorstehen, wie eine bevorzugt zylindrische Oberfläche eines am oberen Ende (20) der Halbschale (2, 4) angeordneten Ansatzes (24).

2. Hohldübel nach Anspruch 1, dadurch gekennzeichnet, daß die Noppen (8, 10) in Radialebenen jeweils in Umfangsrichtung voneinander beabstandet angeordnet sind, wobei die Noppen (8, 10) axial benachbarter Radialebenen in Umfangsrichtung versetzt angeordnet sind.

3. Hohldübel nach Anspruch 1 oder 2, dadurch gekennzeichnet, daß jede Halbschale (2, 4) abwechselnd in der einen Radialebene zwei Noppen (8) und in der nächsten Radialebene drei Noppen (10) aufweist.

4. Hohldübel nach einem der Ansprüche 1 bis 3, dadurch gekennzeichnet, daß die zum unteren Ende (16) des Hohldübels weisende Noppenfläche (18) zur Außenfläche (6) der Halbschale (2, 4) einen kleineren Winkel aufweist als die zum oberen Ende (20) gerichtete Noppenfläche (22).

5. Hohldübel nach einem der Ansprüche 1 bis 4, dadurch gekennzeichnet, daß der innere Hohlraum (28) zum unteren Ende (16) konisch verjüngt ausgebildet ist.

6. Hohldübel nach einem der Ansprüche 1 bis 5, dadurch gekennzeichnet, daß die Halbschale (2, 4) am oberen Ende innen eine konische Erweiterung (36) aufweist.

7. Hohldübel nach einem der Ansprüche 1 bis 6, dadurch gekennzeichnet, daß die Halbschale (2, 4) in der Trennungsfläche (30) auf der einen Seite Vorsprünge (32) und auf der anderen Seite Nuten (34) aufweist.

8. Hohldübel nach einem der Ansprüche 1 bis 7, dadurch gekennzeichnet, daß die Seitenflächen (12) der Noppen (8, 10) und/oder die seitlichen Endflächen (39) des oberen Ansatzes (24) im wesentlichen senkrecht zur Teilungsebene (38) angeordnet sind.

9. Hohldübel nach einem der Ansprüche 1 bis 8, dadurch gekennzeichnet, daß die Halbschalen (2, 4) voneinander unterschiedliche Wandstärken (50, 52) aufweisen und/oder daß die Schraubenachse (62) der eingeschraubten Schwellenschraube (60) exzentrisch zur Bohrungsachse (54) in der Schwelle angeordnet ist.

**Claims**

1. Hollow dowel for railway construction, specifically for wooden sleepers or concrete sleepers, containing two essentially identical half-shells (2, 4) which have projecting parts on their outer surface (6), a cavity (28) for a sleeper screw (60) being provided within the hollow dowel, characterised in that the parts arranged on the outer surface (6) comprise knobble-like projections (8, 10) arranged offset relative to one another, in that the central axes (42, 44) of the respective half-shells (2, 4) are at a distance (40) from the parting plane (38) and are each located on the side of the parting plane (38) remote from the associated half-shell (2, 4), and in that the projections (8, 10) project beyond the outer surface (6) at most only as far as a preferably cylindrical surface of an extension (24) arranged at the upper end (20) of each half-shell (2, 4).

2. Hollow dowel according to claim 1, characterised in that the projections (8, 10) are arranged respectively at a distance from one another in the circumferential direction in radial planes, the projections (8, 10) of axially adjacent radial planes being arranged offset in the circumferential direction.

3. Hollow dowel according to claim 1 or 2, characterised in that each half-shell (2, 4) has alternately two projections (8) in one radial plane and three projections (10) in the next radial plane.

4. Hollow dowel according to one of claims 1 to 3, characterised in that the projection face (18) facing to the lower end (16) of the hollow dowel has a smaller angle relative to the outer surface (6) of the half-shell (2, 4) than the projection face (22) facing to the upper end (20).

5. Hollow dowel according to one of claims 1 to 4, characterised in that the inner cavity (28) is designed to taper conically towards the lower end. (16).

6. Hollow dowel according to one of claims 1 to 5, characterised in that the half-shell (2, 4) has a conical widening (36) on the inside at the upper end.

7. Hollow dowel according to one of claims 1 to 6, characterised in that the half-shell (2, 4) has in the separating surface (30) projections (32) on one side and grooves (34) on the other side.

8. Hollow dowel according to one of claims 1 to 7, characterised in that the side faces (12) of the projections (8, 10) and/or the lateral end faces (39) of the upper extension (24) are arranged essentially perpendicularly relative to the parting plane (38).

9. Hollow dowel according to one of claims 1 to 8, characterised in that the half-shells (2, 4) have wall thicknesses (50, 52) differing from one another, and/or in that the screw axis (62) of the screwed-in sleeper screw (60) is arranged eccentrically relative to the bore axis (54) in the sleeper.

**Revendications**

1. Cheville creuse pour la construction des voies ferrées et, plus précisément, pour les traverses en bois ou en béton, comprenant deux demi-coques (2, 4) de configuration essentiellement analogue, et présentant des parties saillantes sur leur surface extérieure (6), dans laquelle il est prévu dans le volume intérieur de la cheville creuse une cavité (28) destinée à recevoir un tire-fond (60), caractérisée en ce que les parties disposées sur la surface extérieure (6) sont constituées par des bossages (8, 10) disposés dans des positions décalées les unes par rapport aux autres, en ce que l'axe médian (42, 44) de chaque demi-coque (2, 4) se trouve à une certaine distance (40) du plan de joint (38), et se trouve sur le côté du plan de joint (38) qui est le plus éloigné de la demi-coque (2, 4), et en ce que les bossages (8, 10) font saillie sur la surface extérieure (6) au maximum de la même hauteur que la surface, de préférence cylindrique, d'une collerette (24) prévue à l'extrémité supérieure (20) de la demi-coque (2, 4).

2. Cheville creuse selon la revendication 1, caractérisée en ce que les bossages (8, 10) situés dans un même plan radial sont disposés à un certain écartement les uns des autres dans la direction circonférentielle, les bossages (8, 10) contenus dans des plans radiaux adjacents étant décalés les uns par rapport aux autres dans la direction circonférentielle.

3. Cheville creuse selon la revendication 1 ou 2, caractérisée en ce que chaque demi-coque (2, 4) présente en alternance deux bossages (8) dans un plan radial et trois bossages (10) dans le plan radial suivant.

4. Cheville creuse selon l'une des revendications 1 à 3, caractérisée en ce que la surface (18) d'un bossage qui regarde vers l'extrémité inférieure (16) de la cheville creuse est inclinée d'un plus petit angle sur la surface extérieure (6) de la demi-coque (2, 4) que la surface (22) du bossage qui est dirigée vers l'extrémité supérieure (20).

5. Cheville creuse selon l'une des revendications 1 à 4, caractérisée en ce que la cavité intérieure (28) est d'une configuration qui se rétrécit avec une forme conique vers l'extrémité inférieure (16).

6. Cheville creuse selon l'une des revendications 1 à 5, caractérisée en ce qu'à son extrémité supérieure, la demi-coque (2, 4) présente intérieurement un évasement conique (36).

7. Cheville creuse selon l'une des revendications 1 à 6, caractérisée en ce que, dans la surface de joint (30), la demi-coque (2, 4) présente des tenons (32) d'un côté et des mortaises (34) de l'autre côté.

8. Cheville creuse selon l'une des revendications 1 à 7, caractérisée en ce que les surfaces latérales (12) des bossages (8, 10) et/ou les surfaces d'extrémités latérales (39) de la collerette supérieure (24) sont disposées sensiblement perpendiculairement au plan de joint (38).

9. Cheville creuse selon l'une des revendications 1 à 8, caractérisée en ce que les demi-coques (2, 4) présentent des épaisseurs de paroi (50, 52) différentes l'une de l'autre et/ou en ce que l'axe (62) du tire-fond (60) vissé est disposé excentriquement par rapport à l'axe (54) du perçage de la traverse.

Fig. 1

Fig. 2

Fig. 3

Fig. 4

Fig. 5

Fig. 7

Fig. 8

Fig. 6

Fig.9

Fig.10